# EUROPEAN PATENT APPLICATION

(11) **EP 0 846 729 A2**
(43) Date of publication of application: **10.06.1998**
(21) Application number: 97309704.1
(22) Date of filing: 02.12.1997
(51) Int. Cl.: C08L 69/00, C08L 67/02, C08J 3/00

(54) **Modified polycarbonate-polyester composition**

(30) Priority: 03.12.1996 US 757119
(71) Applicant: GENERAL ELECTRIC COMPANY, Schenectady, NY 12345 (US)
(72) Inventor: Chisholm, Bret Ja, Mount Vernon, Indiana 47620 (US); MacLaury, Michael Risley, Rexford, New York 12148 (US)
(74) Representative: Szary, Anne Catherine, Dr.

(57) **Abstract**

A molding composition comprises a polyester resin, a polycarbonate resin and an effective amount of a coated fibrillar polytetrafluorethylene for enhancing the thermo-mechanical properties of a resulting molded article.

## Description

This invention relates to a modified polycarbonate-polyester composition having improved properties.

### Background of the Invention

The benefits of using a fluoropolymer, particularly polytetrafluoroethylene ("PTFE"), as an anti-drip in conjunction with flame retardant additives in a thermoplastic resin composition is known. The use of such additives allows the resin composition to attain a "VO" rating in Underwriter's Laboratories testing regimen.

As per U.S. patent 4,753,994 to Carter et al., issued June 28, 1988, it has been found advantageous to combine the PTFE and a polycarbonate resin by co-precipitation of the two resins. In this teaching, an aqueous dispersion of PTFE is admixed with a solution of polycarbonate resin and caused to coprecipitate by the addition of an ester, aromatic hydrocarbon, aliphatic hydrocarbon, alcohol, carbonate, ether or ketone. The coprecipitate then needs to be isolated, washed and dried in a somewhat costly recovery.

U.S. patent 5,521,230 relates to a method for making an encapsulated PTFE by steam precipitation and dispersing the resulting product into a polymer.

The difficulties associated with uniformly and reproducibly dispersing fluoropolymers in thermoplastic resin compositions are known. Known fluoropolymer dispersions are deficient with respect to stability, tend to be very difficult to handle and are difficult to incorporate into thermoplastic resin compositions. Fluoropolymer-containing thermoplastic resin compositions are typically deficient with respect to the uniformity and reproducibility of the thermoplastic resin compositions. Although the anti-drip characteristics of the resulting composition may be improved, degradation of the mechanical properties frequently occurs.

Hence, processes or products resulting in improved properties from the incorporation of PTFE into polymer compositions represents an advance in the art.

### Summary of the Invention

The compositions of the present invention provide for enhanced thermo-mechanical properties, for example, heat distortion temperature, Vicat softening temperature, and heat sag.

According to the present invention, a molding composition comprises a polyester resin, a polycarbonate resin and an effective amount of a coated fibrillar polytetrafluorethylene for enhancing the thermo-mechanical properties of the composition. The additions are preferably in an amount sufficient to improve the Vicat softening temperature, enhance the heat sag properties, or increase the temperature of crystallization (Tc) of the composition as compared to the same composition without the coated fibrillar polytetrafluorethylene.

In an embodiment of the present invention, a molding composition for forming articles, based on the total weight of the composition, consist essentially of (a) a polyester resin; (c) a polycarbonate resin; (d) optionally an impact modifier; (e) optionally a filler, and (f) an effective amount of coated fibrillar polytetrafluorethylene.

Surprisingly, improved thermal mechanical properties are observed in polyester compositions containing coated fibrillar PTFE in small amounts even though those compositions do not contain a halogenated organic flame retardant. A preferred resin is characterized by the absence of flame retardant ingredients. Other PTFE materials effective in preventing dripping during burning do not give the improved properties seen with the coated PTFE of the present invention.

### Description of the Preferred Embodiments

The molding composition includes the following major ingredients which are described as follows. Polyesters include those comprising structural units of the following formula: 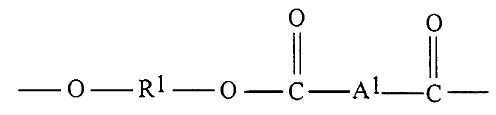 wherein each R¹ is independently a divalent aliphatic, alicyclic or aromatic hydrocarbon or polyoxyalkylene radical, or mixtures thereof and each A¹ is independently a divalent aliphatic, alicyclic or aromatic radical, or mixtures thereof. Examples of suitable polyesters containing the structure of the above formula are poly(alkylene dicarboxylates), liquid crystalline polyesters, and polyester copolymers. It is also possible to use a branched polyester in which a branching agent, for example, a glycol having three or more hydroxyl groups or a trifunctional or multifunctional carboxylic acid has been incorporated. Furthermore, it is sometimes desirable to have various concentrations of acid and hydroxyl end groups on the polyester, depending on the ultimate end-use of the composition.

The R¹ radical may be, for example, a C₂₋₁₀ alkylene radical, a C₆₋₁₂ alicyclic radical, a C₆₋₂₀ aromatic radical or a polyoxyalkylene radical in which the alkylene groups contain about 2-6 and most often 2 or 4 carbon atoms. The A¹ radical in the above formula is most often p- or m-phenylene, a cycloaliphatic or a mixture thereof. This class of polyester includes the poly(alkylene terephthalates) and the polyarylates. Such polyesters are known in the art as illustrated by the following patents, which are incorporated herein by reference.

| | | | |
|---|---|---|---|
| 2,465,319 | 2,720,502 | 2,727,881 | 2,822,348 |
| 3,047,539 | 3,671,487 | 3,953,394 | 4,128,526 |

Examples of aromatic dicarboxylic acids represented by the dicarboxylated residue A¹ are isophthalic or terephthalic acid, 1,2-di(p-carboxyphenyl)ethane, 4,4'-dicarboxydiphenyl ether, 4,4' bisbenzoic acid and mixtures thereof. Acids containing fused rings can also be present, such as in 1,4- 1,5- or 2,6- naphthalenedicarboxylic acids. The preferred dicarboxylic acids are terephthalic acid, isophthalic acid, naphthalene dicarboxylic acid, cyclohexane dicarboxylic acid or mixtures thereof.

The most preferred polyesters are poly(ethylene terephthalate) ("PET"), and poly(1,4-butylene terephthalate), ("PBT"), poly(ethylene naphthanoate) ("PEN"), poly(butylene naphthanoate), ("PBN") and (polypropylene terephthalate) ("PPT"), and mixtures thereof.

Also contemplated herein are the above polyesters with minor amounts, e.g., from about 0.5 to about 5 percent by weight, of units derived from aliphatic acid and/ or aliphatic polyols to form copolyesters. The aliphatic polyols include glycols, such as poly(ethylene glycol) or poly(butylene glycol). Such polyesters can be made following the teachings of, for example, U.S. Pat. Nos. 2,465,319 and 3,047,539.

The preferred poly(1,4-butylene terephthalate) resin used in this invention is one obtained by polymerizing a glycol component at least 70 mol %, preferably at least 80 mol %, of which consists of tetramethylene glycol and an acid or ester component at least 70 mol %, preferably at least 80 mol %, of which consists of terephthalic acid, and polyester-forming derivatives therefore.

The polyesters used herein have an intrinsic viscosity of from about 0.4 to about 2.0 dl/ g as measured in a 60:40 phenol/tetrachloroethane mixture or similar solvent at 23°-30° C. Preferably the intrinsic viscosity is 1.1 to 1.4 dl/g. VALOX Registered TM 315 polyester is particularly suitable for this invention.

In preferred embodiments of the present invention, the polyesters are then blended with a polycarbonate resin. Polycarbonate resins useful in preparing the blends of the present invention are generally aromatic polycarbonate resins.

Typically these are prepared by reacting a dihydric phenol with a carbonate precursor, such as phosgene, a haloformate or a carbonate ester. Generally speaking, such carbonate polymers may be typified as possessing recurring structural units of the formula 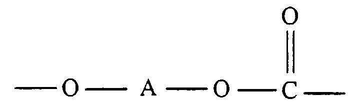 wherein A is a divalent aromatic radical of the dihydric phenol employed in the polymer producing reaction. Preferably, the carbonate polymers used to provide the resinous mixtures of the invention have an intrinsic viscosity (as measured in methylene chloride at 25o C.) ranging from about 0.30 to about 1.00 dl/g. The dihydric phenol which may be employed to provide such aromatic carbonate polymers are mononuclear or polynuclear aromatic compounds, containing as functional groups two hydroxy radicals, each of which is attached directly to a carbon atom of an aromatic nucleus. Typical dihydric phenols are: 2,2-bis(4-hydroxyphenyl) propane; hydroquinone; resorcinol; 2,2-bis(4-hydroxyphenyl) pentane; 2,4'-(dihydroxydiphenyl) methane; bis(2 hydroxyphenyl) methane; bis(4-hydroxyphenyl) methane; 1,1-bis(4-hydroxyphenyl)-3,3,5-trimethylcyclohexane; fluorenone bisphenol, 1,1-bis(4-hydroxyphenyl) ethane; 3,3-bis(4-hydroxyphenyl) pentane; 2,2-dihydroxydiphenyl; 2,6-dihydroxynaphthalene; bis(4-hydroxydiphenyl)sulfone; bis(3,5-diethyl-4-hydroxyphenyl)sulfone; 2,2-bis(3,5-dimethyl-4-hydroxyphenyl)propane; 2,4'-dihydroxydiphenyl sulfone; 5'-chloro-2,4'-dihydroxydiphenyl sulfone; bis-(4-hydroxyphenyl)diphenyl sulfone; 4,4'-dihydroxydiphenyl ether; 4,4'-dihydroxy-3,3'-dichlorodiphenyl ether; 4,4-dihydroxy-2,5-dihydroxydiphenyl ether; and the like.

Other dihydric phenols which are also suitable for use in the preparation of the above polycarbonates are disclosed in U.S. Pat Nos. 2,999,835; 3,038,365; 3,334,154; and 4,131,575.

These aromatic polycarbonates can be manufactured by known processes, such as, for example and as mentioned above, by reacting a dihydric phenol with a carbonate precursor, such as phosgene, in accordance with methods set forth in the above-cited literature and in U.S. Pat. No. 4,123,436, or by transesterification processes such as are disclosed in U.S. Pat. No. 3,153,008, as well as other processes known to those skilled in the art.

It is also possible to employ two or more different dihydric phenols or a copolymer of a dihydric phenol with a glycol or with a hydroxy- or acid-terminated polyester or with a dibasic acid in the event a carbonate copolymer or interpolymer rather than a homopolymer is desired for use in the preparation of the polycarbonate mixtures of the invention. Branched polycarbonates are also useful, such as are described in U.S. Pat. No. 4,001,184. Also, there can be utilized blends of linear polycarbonate and a branched polycarbonate. Moreover, blends of any of the above materials may be employed in the practice of this invention to provide the aromatic polycarbonate.

In any event, the preferred aromatic carbonate for use in the practice in the present invention is a homopolymer, e.g., a homopolymer derived from 2,2-bis(4-hydroxyphenyl)propane (bisphenol-A) and phosgene, commercially available under the trade designation LEXAN Registered TM from General Electric Company.

The instant polycarbonates are preferably high molecular weight aromatic carbonate polymers having an intrinsic viscosity, as determined in chloroform at 25° C of from about 0.3 to about 1.5 dl/gm, preferably from about 0.45 to about 1.0 dl/gm. These polycarbonates may be branched or unbranched and generally will have a weight average molecular weight of from about 10,000 to about 200,000, preferably from about 20,000 to about 100,000 as measured by gel permeation chromatography.

The branched polycarbonates may be prepared by adding a branching agent during polymerization. These branching agents are well known and may comprise polyfunctional organic compounds containing at least three functional groups which may be hydroxyl, carboxyl, carboxylic anhydride, haloformyl and mixtures thereof. Specific examples include trimellitic acid, trimellitic anhydride, trimellitic trichloride, tris-p-hydroxy phenyl ethane, isatin-bis-phenol,tris-phenol TC (1,3,5-tris((p-hydroxyphenyl)isopropyl)benzene),tris-phenol PA (4(4(1,1-bis(p-hydroxyphenyl)-ethyl)alpha, alpha-dimethyl benzyl)phenol), 4-chloroformyl phthalic anhydride, trimesic acid and benzophenone tetracarboxylic acid. The branching agent may be added at a level of about 0.05-2.0 weight percent. Branching agents and procedures for making branched polycarbonates are described in U.S. Letters Pat. Nos. 3,635,895; 4,001,184; and 4,204,047 which are incorporated by reference.

All types of polycarbonate end groups are contemplated as being within the scope of the present invention.

As set forth in U.S. Patent 5,521,230, column 9, line 1 to 19, PTFE is a finely-divided powder or fluff as obtained from the preparative polymerization reaction. When a mass of this finely-divided, untreated polytetrafluoroethylene resin of average particle size 0.1 to 0.2 micron, such as that illustrated in FIGS. 1 and 2 of the article "Teflon"; Tetrafluoroethylene Resin Dispersion by J. F. Lontz and W. B. Happoldt, Jr. In Ind. and Eng. Chem. vol. 44, p. 1800, 1952, is sheared by rubbing in the hands, the particles tend to stick together and form a coherent mass. If this mass is drawn out and examined with a microscope at 50-100 x , it shows fibers of various sizes. Examination with an electron microscope shows that these fibers are bundles of smaller fibers, many of which consist of strings of the primary particles held together by very fine fibrils having diameters from one-fourth to one-tenth or less of the diameter of the particles. As set forth in the patent, polytetrafluoroethylene which has the ability of causing the particles to adhere and draw out into ultra fine fibrils when they are rubbed together with mechanical shearing, is preferred.

In the present invention, the polytetrafluoroethylene (PTFE) is of fibrillar form. The PTFE is typically a solid or an emulsion. PTFE emulsion is preferred. Fibrillar PTFE is available from DuPont. A preferred Teflon® PTFE is available from DuPont as Teflon 30 N which is fibrillar non-granular PTFE. Preferably the coated fibrillar PTFE comprises at least about 40 to 80 percent by weight coating material with the remaining portion comprising PTFE fibers.

For use in the present invention, the fibrillar PTFE is completely or partially coated with synthetic polymers. Typical coatings are polycarbonate, vinyl polymers or vinyl copolymers, and mixtures thereof. Preferred coatings include BPA polycarbonate, polystyrene, acrylonitrile-butadiene-styrene, alkylstyrene-acrylonitrile, polystyrene acrylonitrile, poly (alkylacrylate), poly (alkylmethacrylate), or mixtures thereof. More specifically, the following are included: poly(α-alkyl-styrenes) such as poly-α-methylstyrene,poly-α-ethylstyrene, poly-α-propylstyrene, poly-α-butylstyrene, as poly-p-methylstyrene, acrylic polymers such as polyacrylonitrile, polymethacrylonitrile, poly (alkyl acrylates) such as poly (methyl acrylate), poly (ethyl acrylate), poly (propyl acrylate), poly (butyl acrylate), poly (alkyl methacrylates) such as poly (methyl methacrylate), poly (ethyl methacrylate), poly (propyl methacrylate), poly (butyl methacrylate), vinyl polymers such as poly (vinyl acetate), poly (vinyl alcohols), and their mixtures.

The coating material preferably have a glass transition temperature greater than 50, and most preferably greater than 100 degrees Centigrade. The most preferred polymer coating materials are polycarbonate, styrene-acrylonitrile (SAN), acrylonitrile-butadiene-styrene (ABS), 0:-alkyl-styreneacrylonitrile, in particular α-methylstyrene-acrylonitrile (AMSAN), polystyrene, polystyrene acrylonitrile (PSA) and poly (methyl methacrylate).

Other preferred copolymers for use as coatings comprise copolymers of styrene, alkyl acrylate, alkyl methacrylate, alone or with another monomer such as an acrylonitrile, methacrylonitrile, alkyl methacrylate or alkyl acrylate monomer, as well as grafted polymers such as polybutadiene, styrene-butadiene, for example an acrylonitrile-butadiene copolymer rubber, an alkyl acrylate rubber, a styrene-butadiene rubber.

U.S. patent 5,521,230 relates to a method for making coated PTFE by steam precipitation and dispersing the resulting product into a polymer. The resulting product is described as having highly dispersed PTFE as a drip inhibitor additive without loss of mechanical properties. Details on the process for preparation of steam precipitated PTFE and its incorporation into polymers as set forth in U.S. patent 5,521,230 is incorporated into this application by reference.

In a preferred process, co-precipitation of PTFE and a coating polymer is carried out by steam precipitation, i.e. simultaneous removal of water and solvent by injection and release of steam into the mixture of ingredients, to achieve volatilization. Steam co-precipitation is known in the art. As set forth in the summary of the invention section of U.S. patent 5,521,230, the invention comprises a process for incorporating a solid form of an additive in a highly dispersed manner into particles of a thermoplastic synthetic polymer, which comprises; providing a fluid mixture of the additive; providing a solution of the polymer resin; admixing the additive mixture with the polymer resin solution; and removing the fluid and the solvent from the admixture simultaneously, whereby there is a co-precipitation of the additive and the polymer resin powder from the admixture. The portion of the above mentioned patent describing the above is incorporated by reference into the present specification.

Another preferred process coating PTFE, is set forth in copending application Serial Number 08/606,027, filed October 6, 1995, entitled Novel Poymerizate-Based Polymer Blends Comprising Groups of Tetrafluoroethylene Derivatives, Process for Manufacture, Articles Obtained from such Blends and Use of these Blends in Polymer Compositions by Fai Lo et al.. The specification of this application is incorporated into the present application by reference. Particularly, the following portions.

As set forth, tetrafluoroethylene polymerizate, PTFE and with or without quantities of ethylenically unsaturated monomer are polymerized. These polymers are known and described in "Vinyl and related Polymers", Schildknecht, John Wiley & Sons, Inc., New York, 1952, pages 484-494, and "Fluoropolymers" Woll, Wiley-Interscience, John Wiley & Sons, Inc., New York, 1972. The polymers for encapsulating the PTFE are polymers, copolymers, or monomers which can be emulsion-polymerized, in particular by radical route. The most preferred polymers are styrene-acrylonitrile and α-methylstyrene-acrylonitrile copolymers, poly (alkyl acrylates), poly (alkyl methacrylates). The coated PTFE is prepared by emulsion polymerization of polymer in the presence of PTFE. Various emulsion-polymerization processes may be used to produce the encapsulation polymer, for example a discontinuous, semi-continuous or continuous emulsion. The term emulsion denotes an emulsion alone or an emulsion-suspension.

Emulsion polymerization by the radical route is a known process. The radical polymerization is described in the work "Chemie Macromoleculaire [Macromolecular Chemistry]", volume 1, chapter III, by G. Champetier, Hermann.

The coated fibrillar PTFE is incorporated into the resin composition by uniformly mixing into the desired resin composition. The coated fibrillar PTFE may be utilized in an effective amount to enhance the thermo-mechanical properties of a resulting molded composition. Preferred amounts effectively increase the Tc (crystallization temperature), improve the Vicat softening temperature, or decrease the heat sag which is typically measured as lineal displacement at a particular temperature. The desirable additions of fibrillar PTFE are sufficient to increase the Tc by about 5 to about 20 degrees, more preferably by about 10 degrees Centigrade. Preferred additions are in small amounts from about 0.05 to about 5 percent, more preferably from about 0.05 to about 1 percent by weight PTFE, including the coating, based on the total weight of the final composition. Surprisingly, improved thermal mechanical properties are observed in non-flame retardant compositions where coated fibrillar PTFE is incorporated into the resin in small amounts. A preferred resin is characterized by the absence of flame retardant ingredients and the absence of anitimony synergist.

Typically the blends of polyester and polycarbonate will contain from about 10 to about 90 parts by weight of polycarbonate and from about 90 to about 10 parts by weight of polyester. In preferred embodiments, the amount of polyester in the blends will range from about 20 to about 80, more preferably from about 30 to about 70, and most preferably from about 40 to about 60 parts by weight. Correspondingly, the amount of polycarbonate will range from about 80 to about 20, more preferably from about 70 to about 30, and most preferably from about 60 to about 40 parts by weight.

The method of blending the compositions can be carried out by conventional techniques. One convenient method comprises blending the polyester and other ingredients in powder or granular form, extruding the blend and comminuting into pellets or other suitable shapes. The ingredients are combined in any usual manner, e.g., by dry mixing or by mixing in the melted state in an extruder, on a heated mill or in other mixers.

Other compositions comprise reinforcing agents. Typical reinforcing agents include glass flakes, glass beads, glass fibers, and combinations thereof, or mineral reinforcements, such as talc, mica, clay, silica, mixtures of any of the foregoing and the like. Filamentous glass is a preferred filler. A wide variety of compositions are useful for automobile panels, recreational vehicles, business equipment, computer housings, for both coated and uncoated applications. For compositions ultimately to be employed for electrical uses, it is preferred to use fibrous glass filaments comprised of borosilicate glass that is relatively soda-free. This is known as "E" glass. The filaments are made by standard processes, e.g., by steam or air blowing, flame blowing and mechanical pulling. The preferred filaments for plastic reinforcement are made by mechanical pulling. The filament diameters preferably range from about 3 to 30 microns. In preparing the molding compositions it is convenient to use the filamentous glass in the form of chopped strands of from about 1/8 " to about 1/2" long. In articles molded from the compositions on the other hand, even shorter lengths will be encountered because, during compounding considerable fragmentation will occur.

In general, the filamentous glass or mineral reinforcement comprises from about 2.5 to about 60% by weight based on the total weight of the compositions of the present invention. It is more preferred that the glass comprise from about 5 to about 55 and most preferred from about 15 to about 40% by weight of the total weight of the composition.

In other embodiments of the present invention, the compositions can further comprise impact modifiers. Particularly useful impact modifiers generally comprise rubbery impact modifiers. These are well known to those skilled in the art, and any of them normally employed with polyester resins and/or polycarbonate may be employed herein.

The preferred impact modifiers generally comprise an acrylic or methacrylic grafted polymer of a conjugated diene or an acrylate elastomer, alone, or copolymerized with a vinyl aromatic compound. Particularly useful are the core-shell polymers of the type available from Rohm & Haas, for example, those sold under the trade designation Acryloid®. In general these impact modifiers contain units derived from butadiene or isoprene, alone or in combination with a vinyl aromatic compound, methyl methacrylate or butyl acrylate, alone or in combination with a vinyl aromatic compound. The aforementioned impact modifiers are believed to be disclosed in Fromuth et al., U.S. Patent No. 4,180,494; Owens, U.S. Patent No. 3,808,180; Farnham et al., U.S. Patent No. 4,096,202; and Cohen et al., U.S. Patent No. 4,260,693. Most preferably, the impact modifier will comprise a two stage polymer having either a butadiene or butyl acrylate based rubbery core and a second stage polymerized from methylmethacrylate alone, or in combination with styrene. Also present in the first stage are crosslinking and/or graftlinking monomers. Examples of the crosslinking monomers include 1,3-butylene diacrylate, divinyl benzene and butylene dimethacrylate. Examples of graftlinking monomers are allyl acrylate, allyl methacrylate and diallyl maleate.

Rubber impact modifiers, especially rubbery impact modifier with a Tg less than 0°C are preferred. Such impact modifiers are preferably high rubber graft or ABS including the type disclosed in U.S. Patent No. 4,292,233. These impact modifiers comprise, generally, a relatively high content of a butadiene polymer grafted base having grafted thereon acrylonitrile and styrene.

Other suitable impact modifiers include, but are not limited to ethylene vinyl acetate, ethylene ethylacrylate copolymers, SEBS (styrene-ethylenebutylene styrene) and SBS (styrene-butadiene-styrene) block copolymers, EPDM (ethylene propylene diene monomer) and EPR (ethylene propylene rubber) copolymers, etc. All of these are well known to those skilled in the art and are available commercially.

Stabilizers may be utilized and are typically present at levels of 0.01-10 weight percent and preferably at a level of from 0.05-2 weight percent. The stabilizers include an effective amount of an acidic phosphate salt; an acid, alkyl, aryl or mixed phosphite having at least one hydrogen or alkyl group; a Group IB or Group IIB metal phosphate salt; a phosphorous oxo acid, a metal acid pyrophosphate or a mixture thereof. The suitability of a particular compound for use as a stabilizer and the determination of how much is to be used as a stabilizer may be readily determined by preparing a mixture of the polyester component and the polycarbonate with and without the particular compound and determining the effect on melt viscosity or color stability or the formation of interpolymers. These stabilizers are further described in previously mentioned US patent 5,441,997 to Walsh in column 6, line 48 to column 7, line 10. This text is incorporated by reference into the present application.

Although it is not essential, best results are obtained if the ingredients are precompounded, pelletized and then molded. Precompounding can be carried out in conventional equipment. For example, after predrying the polyester resin, other ingredients, and, optionally, other additives and/or reinforcements, a single screw extruder is fed with a dry blend of the composition, the screw employed having a long transition section to insure proper melting. On the other hand, a twin screw extrusion machine can be fed with resins and some additives at the feed port and the remaining material down stream.

The compositions may include a wide variety of other additives, such as UV stabilizers, pigments, colorants, fillers, plasticizers, processing aids, antioxidants and the like. Such components are added in effective amounts to impart desired properties.

The compositions can be molded in any equipment conventionally used for thermoplastic compositions. For example, good results will be obtained in an injection molding machine, e.g. of the 85 ton Demag type, with conventional temperatures which depend on the particular thermoplastic utilized. If necessary, depending on the molding properties of the polyester, the amount of additives and/or reinforcing filler and the rate of crystallization of the polyester component, those skilled in the art will be able to make the conventional adjustments in molding cycles to accommodate the composition.

The following examples are illustrative of the invention.

### Sample preparation

Blends were prepared by melt-mixing using a 30 mm Werner and Pfeiderer twin screw extruder operating at a speed 300 rpm. The temperature setting of the heater bands was 50, 200, 220, 240, 240°C, respectively, from the throat to the die.

Specimens for mechanical property testing were prepared by injection molding using an 85 ton Demag molding machine. The heater bands from the throat to the nozzle were set at 235, 245, 255, 250°C, respectively. Mold temperature was 60°C, cycle time was 42 seconds with a 20 second cooling time, and material residence time was 3 minutes. Pellets were dried at 120°C for a minimum of 2 hours. Test specimens for tensile testing and notched Izod impact testing were ISO standard specimens and were 16.6 cm long, 4.0 mm thick, 2.0 cm wide, with a gage length of 8.5 cm, and gauge width of 1.0 cm, while specimens for notched IZOD impact were 10.0 mm wide, 4.0 mm thick, and 8.0 cm long. A 2.0 mm notched was placed in the impact specimens using a Testing Machines Inc. ® model TMI 22-05 notch cutter.

### Property determination

Ductile-brittle transition temperature (D/B temperature) was determined by measuring notched-IZOD impact at different temperatures and determining at which temperature the fracture behavior goes from ductile to brittle. At temperatures below the D/B temperature fracture behavior is brittle and crack propagation occurs with relatively little energy absorption and little yielding of the resin sample, while at temperatures above the D/B temperature the material is ductile and crack propagation occurs with relatively large energy absorption. Notched-IZOD impact testing was done according to ISO procedure ISO180 using a 2.75 Joule hammer. Five specimens were tested at a given temperature.

Vicat softening point was determined using ISO standard procedure ISO306. A load of 50 N and heating rate of 120°C/hour was employed. All measurements were done in duplicate.

Tensile testing was conducted according to ISO test procedure ISO527 using a Zwick® 1474 tensile tester operating at a speed of 50 mm/min.

Heat sag was measured by securing the gated-end of a tensile bar into a clamp. An overhang of 14.3 cm was used. The initial height (A) was measured and then the whole frame was placed in a hot, 120°C circulation oven for one hour. After one hour the whole apparatus was removed from the oven and allowed to cool for 15 minutes. After 15 minutes, the height "B" was measured. Heat sag was reported as the lineal displacement of the tensile bar "A" - "B".

Crystallization temperature (Tc) was determined by differential scanning calorimeter using a Perkin Elmer® DCS7. Samples sizes ranged from 7.0 to 12.0 mg. The thermograms were obtained using a heating and cooling regime consisting of: heating to 280°C, holding for 1 minute and cooling to 30°C at a cooling rate of 20°C/min.

### Materials

Table I shows the molecular weight (MW) of the various polymers used in the examples.

**Table I.**

| Molecular weights of the polymers used. | | |
|---|---|---|
| **Polymer** | **Wt avg MW** | **No. avg MW** |
| PBT I** | 110,000 | 34,200 |
| PBT II** | 46,000 | 17,000 |
| PC* | 23,000 | |

| | | |
|---|---|---|
| *Molecular weight value determined by GPC expressed relative to PC. | | |
| **Molecular weight value determined by gel permeation chromatography (GPC) and expressed relative to polystyrene. | | |

The coated PTFE for use in accordance with the invention are PTFE "C" and "D" as set forth below while PTFE "A" and "B" are for comparison and not PTFE of the invention. Four different PTFE compounds were used in producing the materials described in Tables II and III. PTFE compound "A is a granular, non-fibrillar PTFE (not of the invention). PTFE compound "B" is a physical blend of 20 wt % fibrillar Teflon and 80 wt % PC (not of the invention) in which the PTFE is an emulsion sold by DuPont under the trade name Teflon 30 N and is mixed with PC powder and then devolatized. PTFE compound "C" is a blend of 20 wt % Teflon 30 N and 80 wt % PC in which two materials are steam precipitated together as set forth in U.S. Patent 5,521,230 previously referred to. PTFE compound "D" is a material which is 50 wt % PTFE (Teflon 30 N) encapsulated with 50 wt % styrene-acrylonitrile copolymer as described in application Serial Number 08/606,027, filed October 6, 1995, previously referred to.

In Tables II and III, R¹ - R4 are incorporated as reference materials for comparison purposes whereas E1-E7 are examples of the invention.

Reference materials R1 and R4 consist of 16.93 wt % PBT I, 25.47 wt % PBT II, 45.87 wt % PC, 11.00 wt % of a methylmethacrylate-butadiene-styrene core-shell graft copolymer, 0.30 wt % pentaerythritol tetrastearate, 0.30 wt % octadecyl-3-(3,5-di-tert-butyl4-hydroxylphenyl)-propionate, 0.08 wt % phosphorous acid (45 % aqueous solution), and 0.05 wt % pentaerythritoltetrakis-3(laurylthiopropionate). For all other materials described in Tables II and III, the composition is the same as R1 and R4 except that a PTFE compound is substituted for an equivalent portion of PBT. In all materials, the ratio of PBT I to PBT II is the same as that of R1 and R4.

Table II shows the importance of the form of the PTFE as well as the nature of the PTFE compound. Comparison of R2 to R3 and El shows that fibrillar PTFE results in higher Vicat and Tc as well as lower heat sag and D/B temperature when compared at equal PTFE content to granular PTFE. Comparison of R3 to E1 shows that the method of preparation of the PTFE compound is important for material impact properties. Steam precipitation is needed to get better impact performance.

**Table II.**

| (Comparison at 0.5 wt % PTFE. | | | | |
|---|---|---|---|---|
| Example Number | R¹ | R2 | R3 | E1 |
| Type of PTFE compound | ---- | A | B | C |
| Wt % PTFE compound | 0 | 0.5 | 2.5 | 2.5 |
| Tc (C) | 180 | 187 | 196 | 196 |
| Vicat temp. (C) | 124 | 128 | 133 | 132 |
| Heat Sag (mm) | 24 | 18 | 12 | 13 |
| D/B temp. (C) | -27 | >5 | 2 | -10 |
| Tensile Modulus(MPa) | 1845 | 1688 | 2016 | 1956 |
| Yield Stress (MPa) | 41 | 42 | 42 | 42 |
| Elongation (%) | 135 | 58 | 20 | 130 |

Table III shows examples of materials containing low levels of PTFE compounds "C" and "D" of the invention. It can be seen, E2 to E7, that even at low levels of PTFE, a significant enhancement of thermo-mechanical properties (higher Vicat, - temperature lower heat sag) is obtained while maintaining good impact properties and elongation.

**Table III.**

| Examples using low levels of PTFE | | | | | | | |
|---|---|---|---|---|---|---|---|
| Example number | R4 | E2 | E3 | E4 | E5 | E6 | E7 |
| Type of PTFE cmpd | ---- | C | D | C | D | C | D |
| Wt % PTFE cmpd | 0 | .05 | .05 | .1 | .1 | .2 | .2 |
| Tc (C) | 181 | 190 | 192 | 190 | 193 | 192 | 194 |
| Vicat temp. (C) | 120 | 125 | 126 | 125 | 126 | 127 | 126 |
| Heat Sag (mm) | 31 | 24 | 22 | 21 | 21 | 21 | 19 |
| D/B temp. (C) | -26 | -20 | -17 | -16 | -15 | -15 | -12 |
| Tensile Modulus(MPa) | 2104 | 2154 | 2170 | 2179 | 2185 | 2146 | 2249 |
| Yield Stress (Mpa) | 53 | 53 | 54 | 54 | 54 | 53 | 55 |
| Elongation (%) | 109 | 93 | 110 | 48 | 73 | 75 | 60 |

## Claims

1. A molding composition comprising a polyester resin, a polycarbonate resin and an effective amount of a polymer coated fibrillar polytetrafluorethylene for enhancing the thermo-mechanical properties of said composition.

2. A molding composition according to claim 1 wherein said coated fibrillar polytetrafluorethylene is prepared by removal of water by release of steam into a mixture of coating polymer and fibrillar polytetrafluorethylene to obtain said coated fibrillar polytetrafluorethylene.

3. A molding composition according to claim 2 wherein said coated polytetrafluorethylene is present as an emulsion.

4. A molding composition according to claim 1 wherein said coated fibrillar polytetrafluorethylene is prepared by emulsion polymerization of a coating polymer onto said fibrillar polytetrafluorethylene to obtain said coated fibrillar polytetrafluorethylene.

5. A molding composition according to claim 4 wherein said coated fibrillar polytetrafluorethylene is in emulsion form during said emulsion polymerization to obtain said coated fibrillar polytetrafluorethylene.

6. A molding composition according to any of the preceding claims wherein said molding composition comprises sufficient coated fibrillar polytetrafluorethylene for increasing the crystallization temperature, increasing the Vicat softening temperature, or decreasing the heat sag of said composition containing said coated fibrillar polytetrafluorethylene as compared to said composition without said coated fibrillar polytetrafluorethylene.

7. A molding composition according to any of the preceding claims wherein said composition consists essentially of (a) from 10 to 90 weight percent of a polyester resin; (c) from 90 to 10 weight percent of a polycarbonate resin; (d) optionally an impact modifier; (e) optionally a filler, and (f) an effective amount of a said coated fibrillar polytetrafluorethylene.

8. A molding composition according to any of the preceding claims wherein said molding composition comprises from about 0.05 to about 5 percent by weight of coated fibrillar polytetrafluorethylene.

9. A molding composition according to any of the preceding claims wherein said coating comprises polycarbonate, polystyrene, acrylic polymers, vinyl polymers or vinyl copolymers, and mixtures thereof.

10. A molding composition according to any of the preceding claims wherein said polyester is selected from the group consisting of poly(ethylene terephthalate) ("PET"), and poly(1,4-butylene terephthalate), ("PBT"), poly(ethylene naphthanoate) ("PEN"), poly(butylene naphthanoate), ("PBN") and polypropylene terephthalate) ("PPT"), and mixtures thereof.
